# FASCICULE DE BREVET EUROPEEN

(11) **EP 1 609 326 B1**
(45) Date de publication et mention de la délivrance du brevet: **06.09.2006**
(21) Numéro de dépôt: 04741429.7
(22) Date de dépôt: 19.03.2004
(51) Int. Cl.: H04Q 7/32

(54) **PROCEDE DE PROTECTION D'UN TERMINAL DE TELECOMMUNICATION DE TYPE TELEPHONE MOBILE**
VERFAHREN ZUM SCHUTZ EINES TELEKOMMUNIKATIONSENDGERÄTS DES MOBILTELEPHONTYPS
METHOD OF PROTECTING A MOBILE-TELEPHONE-TYPE TELECOMMUNICATION TERMINAL

(30) Priorité: 21.03.2003 FR 0303451
(43) Date de publication de la demande: 28.12.2005
(73) Titulaire: GEMPLUS, 13420 Gémenos (FR)
(72) Inventeur: MOITREL, Pascal, F-13400 AUBAGNE (FR); GUTERMAN, Pascal, F-13360 ROQUEVAIRE (FR); PROUST, Philippe, F-13004 MARSEILLE (FR); SUSTEK, Laurent, F-13390 AURIOL (FR); PAULIAC, Mireille, Traverse des Aubes, F-13400 AUBAGNE (FR); CARDONNEL, Cédric, F-13470 CARNOUX EN PROVENCE (FR)
(86) Numéro de dépôt international: PCT/EP2004/050333
(87) Numéro de publication internationale: WO 2004/084525

(56) Documents cités:
- EP-A- 1 061 755
- FR-A- 2 807 177
- US-A- 6 138 005
- US-A1- 2002 147 918

## Description

La présente invention concerne un procédé de protection d'un terminal de télécommunication. Elle concerne également un équipement comprenant un terminal de télécommunication protégé par la mise en oeuvre du procédé.

On entend par terminal de télécommunication tout téléphone portable ou mobile ou assistant personnel associé à un composant personnel, matériel ou logiciel qui comprend des données nécessaires à l'accès à un service par un utilisateur. Dans le cas du GSM, il s'agit d'une carte à circuit(s) intégré(s) dite carte à puce et classiquement appelée carte SIM (Subscriber Identity Module) ou (U)SIM, délivrée au moment de l'acquisition d'un téléphone mobile à un abonné.

Le terminal mobile d'un abonné est équipé d'une unité fonctionnelle dite « lecteur de carte à puce » lui permettant des communications avec la carte SIM. Ce lecteur comprend une interface homme-machine pour permettre des échanges entre l'utilisateur et la carte à travers le terminal.

Cette unité fonctionnelle du terminal comprend en outre une unité de traitement reliée à des moyens de mémorisation d'informations pour son fonctionnement : programmes et données. Le terminal possède en outre des moyens de communications avec le ou les réseaux de télécommunication.

Des problèmes se posent avec l'accroissement du marché de la téléphonie mobile.

En effet :
1) Un appareil de l'art antérieur contient des mémoires librement accessibles en lecture et en écriture et les données sensibles de l'utilisateur et le savoir faire de l'opérateur sont facilement accessibles en cas de vol.
2) Un appareil de l'art antérieur est compatible avec une utilisation par d'autres réseaux d'opérateurs en changeant son composant personnel.
3) Un appareil est souvent fourni à bas prix par un opérateur de téléphonie à un nouvel abonné. En contre partie, il limite les utilisations pendant une période donnée.

Une solution existe aujourd'hui dans le domaine GSM pour répondre à ces deux derniers problèmes. Cette solution est appelée mécanisme de verrouillage ou encore SIM Lock et a été définie par l'ETSI. Elle permet de limiter les inconvénients liés au vol d'un téléphone portable. Le principe est de verrouiller le téléphone à certains accès particuliers afin d'éviter qu'un voleur ne puisse s'en servir librement en cas de vol et que l'utilisateur s'en serve sur des réseaux concurrents.

Le mécanisme "SIMLock" peut avoir 3 types d'effets :
- il verrouille un appareil pour le réseau d'un opérateur particulier ;
- il verrouille un appareil à des services particuliers d'un opérateur donné ;
- il verrouille un appareil sur une carte SIM donnée.

Le "SIMLock" d'un appareil est réalisé par un indicateur ou "flag" au sein de l'appareil qui indique que l'appareil est dans un état verrouillé. Lors de l'allumage d'un téléphone verrouillé, ce dernier récupère le numéro IMSI de la carte (numéro d'identification de la carte) et vérifie sa concordance avec les conditions de verrouillage.

Le déverrouillage d'un téléphone est possible à l'aide d'un code secret, calculé par un algorithme secret en possession de l'opérateur, en fonction du code IMEI qui est le numéro de série unique d'un téléphone, enregistré dans la mémoire RAM.

Les appareils de l'art antérieur présentent les inconvénients suivants :
- les données confidentielles ne sont pas protégées et tout le monde peut y accéder ;
- le "SIMLock" existant n'est pas efficace pour les raisons suivantes :
   - l'algorithme secret de déverrouillage étant largement répandu dans de nombreux points de vente, il est très difficile d'éviter les fuites et il devient public. Comme le code IMEI du téléphone n'est pas dans une mémoire protégée du téléphone, il est aussi accessible : un voleur peut donc relativement facilement calculer le code de déverrouillage du téléphone ;
   - la mémoire du téléphone n'est pas protégée et un fraudeur peut réussir à modifier directement le "flag" de verrouillage sans calculer le code de déverrouillage. Il peut aussi remplacer le numéro IMEI par un autre IMEI dont il connaît le code de déverrouillage associé.

Le problème que l'on cherche à résoudre concerne la protection des terminaux contre les utilisations frauduleuses, notamment en cas de vol.

Un premier sous problème concerne la protection des données.

Un deuxième sous problème consiste à augmenter la sécurité apportée par le mécanisme de verrouillage de l'état de l'art antérieur afin de limiter ses utilisations frauduleuses.

L'invention a pour objet un procédé de protection d'un terminal de télécommunication comprenant un composant personnel nécessaire à l'accès réseau de télécommunication, de type carte à puce, le terminal comprenant une unité de traitement, au moins une mémoire de fonctionnement contenant les informations nécessaires au fonctionnement du terminal à savoir un programme de fonctionnement du terminal, et des données nécessaires à ce programme principalement caractérisé en ce qu'il consiste :
a) à chiffrer le contenu de la mémoire de fonctionnement du terminal de télécommunication, à partir d'une clé K prédéterminée nécessaire au déchiffrement,
b) à permettre le déchiffrement par le terminal après :
   - démarrage de ce dernier au moyen d'un programme de démarrage enregistré dans une mémoire sécurisée (21) et,
   - calcul par ce dernier de la clé servant au déchiffrement.

Selon une autre caractéristique, le déchiffrement se fait à la volée par une unité de calcul qui déchiffre par blocs les informations de la mémoire de fonctionnement, stocke les blocs déchiffrés dans un registre, l'unité de traitement utilisant ces blocs déchiffrés pour travailler

Selon une autre caractéristique, l'utilisation du terminal peut être verrouillée à l'aide d'un verrou stocké dans la mémoire de fonctionnement.

Avantageusement, la clé de déchiffrement est fonction d'une information caractéristique du terminal, comme le numéro d'un composant matériel stocké dans la mémoire OTP dudit composant.

Selon une autre caractéristique, la clé de déchiffrement est notamment fonction d'une information caractéristique de la carte à puce, cette information étant enregistrée dans une mémoire de la carte à puce de manière non modifiable.

Un autre objet de la présente invention concerne un terminal de télécommunication comprenant un composant personnel nécessaire à l'accès réseau de télécommunication de type carte à puce; première unité de traitement, une mémoire de fonctionnement contenant les informations nécessaires au fonctionnement du terminal à savoir un programme de fonctionnement du terminal et des données nécessaires à ce programme principalement caractérisé en ce que le contenu de la mémoire de fonctionnement est chiffré, en ce que le terminal comprend en outre une mémoire de programme contenant un programme de démarrage permettant de lancer le calcul de la clé K nécessaire au déchiffrement.

Selon une autre caractéristique, le terminal comprend une deuxième unité de traitement dédiée au déchiffrement à la volée de la mémoire de fonctionnement, et un registre pour stocker par blocs les informations déchiffrées à la volée, l'unité de traitement utilisant ces blocs déchiffrés pour travailler.

Selon une autre caractéristique, le terminal comprend un composant matériel non modifiable contenant une donnée caractéristique du terminal, cette donnée étant utilisée dans le calcul de la clé K.

D'autres particularités et avantages de l'invention apparaîtront clairement dans la description suivante, donnée à titre d'exemple non limitatif et en regard des dessins annexés sur lesquels :
- la figure 1, représente un schéma d'un terminal de télécommunication de type téléphone mobile associé à une carte à puce, apte à mettre en oeuvre le procédé selon un premier mode de réalisation,
- la figure 2, représente un schéma d'un terminal de télécommunication correspondant à un deuxième mode de fonctionnement.

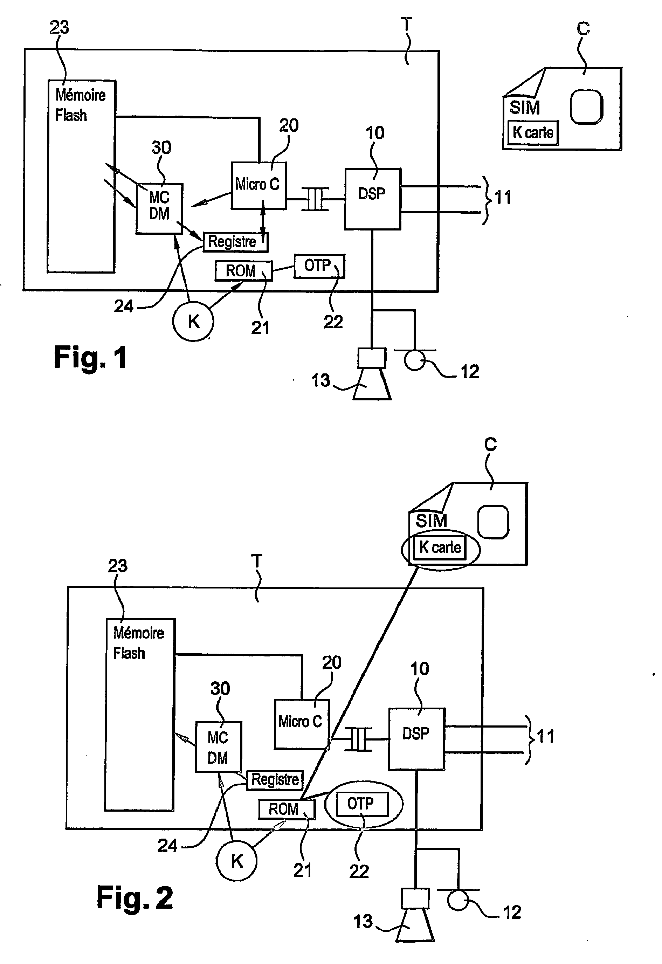

L'équipement illustré sur les figures 1 et 2 correspond à un terminal de télécommunication T associé à une carte à puce C de type carte SIM.

Le terminal est dans l'exemple de la description qui est donnée dans la suite, un téléphone mobile T. Mais l'invention s'applique bien sur à tout appareil assurant une fonction de téléphone mobile, il peut s'agir d'un assistant personnel.

La carte à puce C associée, comprend de façon connue, des mémoires contenant des programmes d'application et au moins une information caractéristique telle que le numéro IMSI.

Le téléphone T comporte de façon connue:
- Un processeur spécialisé 10 permettant d'émettre et de recevoir des appels téléphoniques, ce processeur étant relié à une antenne 11, à un microphone 12 et à un haut-parleur 13 du téléphone,
- une première unité de traitement 20 apte à assurer les échanges avec la carte à puce C,
- une mémoire 23 programmable et effaçable électriquement (mémoire Flash).

La carte à puce C associée à un téléphone est destinée à être insérée dans le téléphone. L'unité de traitement 20 peut dialoguer avec la carte C pour la vérification du code d'identification de l'utilisateur (code PIN) et pour le pilotage par la carte des différents programmes d'application résidents.

Selon l'invention le terminal comporte en outre :
- une deuxième unité de traitement 30 dédiée au chiffrement/déchiffrement. Cette unité comporte un algorithme de déchiffrement à la volée comprenant un algorithme de calcul et un calcul de clé.
- un registre 24;
- une mémoire 21 de programme à lecture seule de type ROM,
- une mémoire 22 protégée associée à un composant (matériel : unité de traitement ou mémoire). Cette mémoire 22 est par exemple une mémoire programmable une seule fois (one time programmable, mémoire OTP du composant),

Les programmes nécessaires au fonctionnement du terminal et les données caractéristiques du téléphone, sont enregistrés dans la mémoire 23 et ont été chiffrés avant enregistrement. Cette mémoire est dite mémoire de fonctionnement du terminal. Elle comporte le programme source de fonctionnement, le système d'exploitation, l'indicateur du verrou SIMLOCK, le code IMEI, le vérifieur du code de déblocage du verrou SIMLOCK et par exemple le répertoire de l'utilisateur.

L'ensemble des informations enregistrées dans cette mémoire 23 ne sont pas accessibles sans le programme de déchiffrement et la clé K qui a été utilisée pour ce chiffrement.

Le fonctionnement du terminal est soumis au calcul de la clé K. En outre l'accès aux informations stockées dans la mémoire du terminal est impossible sans la connaissance de cette clé K, ces informations sont ainsi protégées contre toute falsification.

Seul le terminal lui-même peut procéder au déchiffrement du contenu de la mémoire à condition qu'il soit apte à calculer la clé ayant servi au chiffrement.

Un premier niveau de protection correspondant à un premier mode de réalisation illustré par le schéma de la figure 1, consiste à choisir une clé K fonction d'une information non modifiable caractérisant de façon unique le terminal. On prendra de préférence un numéro de série NS d'un composant matériel (processeur, mémoire) stocké dans la mémoire 22 programmable une seule fois associée au composant, comme donnée caractéristique pour générer la clé K.

Ce premier niveau de protection permet de protéger la mémoire 23 contre toute lecture de son contenu et également contre toute modification de son contenu.

Les informations contenues dans la mémoire 22 du téléphoné restent secrètes et infalsifiables.

Dans l'exemple qui vient d'être donné, après calcul de la clé K, le terminal peut fonctionner avec toute carte SIM, à condition bien sûr que le verrou SIMLOCK ne soit pas présent dans la mémoire 23. Toutefois, ses données ne sont jamais accessibles en clair, ce qui résout le premier sous problème technique et apporte un premier degré de sécurité.

Un niveau supérieur de protection correspondant au deuxième mode de réalisation illustré par la figure 2, est proposé dans l'exemple qui suit. Ce mode peut même permettre de s'abstenir de prévoir le verrou SIMLOCK.

On choisit, dans ce cas, une clé K fonction non seulement d'une information non modifiable caractérisant de façon unique le terminal, mais aussi d'une clé secrète Kcarte associée à la carte SIM lors de la fabrication de la carte afin d'assurer sa sécurité. On peut utiliser le numéro IMSI par exemple.

Ainsi, le fonctionnement du téléphone sera verrouillé sans la connaissance de cette clé K liée à la carte SIM résidente. Le téléphone ne pourra pas être déverrouillé si la carte SIM a été changée.

Pour permettre à un téléphone mobile de fonctionner, un programme de démarrage BOOT est enregistré dans la mémoire à lecture seule 21. L'unité de traitement 20 réalisée par un microprocesseur démarre à partir de ce programme dès que le terminal est mis sous tension et que l'utilisateur a entré son code secret.

Le programme de démarrage permet de lancer l'exécution du calcul de la clé K. Lorsque la clé est calculée, celle-ci est utilisée pour l'opération de déchiffrement réalisée par l'unité de calcul dédiée 30.

Le déchiffrement se fait à la volée. L'unité 30 déchiffre par bloc les informations de la mémoire 23 à la demande du microprocesseur 20. Chaque bloc peut, par exemple être constitué d'un mot logique. Le microprocesseur stocke provisoirement les blocs déchiffrés en dehors de la mémoire 23, et plus précisément dans le registre 24, pour les exploiter.

Le contenu de la mémoire 23 reste toujours chiffré. Le microprocesseur utilise le contenu du registre 24 pour travailler.

Dans le cas où la clé de déchiffrement est dérivée des deux composantes à savoir la clé Kcarte et le numéro de série NS stocké en mémoire 22, le téléphone ne pourra pas fonctionner avec une autre carte SIM. L'utilisateur conserve toutefois la possibilité d'effectuer un déblocage volontaire de son téléphone. Dans ce cas, les données de la mémoire 23 sont déchiffrées puis re-chiffrées à la volée avec une nouvelle clé. Cette opération est bien sûr réversible.

On note que l'invention s'applique à tout appareil de télécommunication comportant un composant personnel, de type carte SIM d'un téléphone mobile.

## Revendications

1. Procédé de protection d'un terminal de télécommunication comprenant un composant personnel nécessaire à l'accès réseau de télécommunication, de type carte à puce, le terminal comprenant une unité de traitement, au moins une mémoire de fonctionnement contenant les informations nécessaires au fonctionnement du terminal à savoir un programme de fonctionnement du terminal, et des données nécessaires à ce programme, **caractérisé en ce qu'**il consiste :
a) à chiffrer le contenu de la mémoire de fonctionnement du terminal de télécommunication, à partir d'une clé K prédéterminée nécessaire au déchiffrement,
b) à permettre le déchiffrement par le terminal après :
- démarrage de ce dernier au moyen d'un programme de démarrage enregistré dans une mémoire sécurisée (21) et,
- calcul par ce dernier de la clé servant au déchiffrement.

2. Procédé de protection d'un terminal mobile, selon la revendication 1, **caractérisé en ce que** le déchiffrement se fait à la volée par une unité de calcul (30) qui déchiffre par blocs les informations de la mémoire de fonctionnement, stocke les blocs déchiffrés dans un registre, l'unité de traitement utilisant ces blocs déchiffrés pour travailler

3. Procédé de protection d'un terminal mobile, selon l'une des revendications précédentes, **caractérisé en ce que** l'utilisation du terminal peut être verrouillée à l'aide d'un verrou stocké dans la mémoire de fonctionnement.

4. Procédé de protection d'un terminal mobile, selon l'une quelconque des revendications précédentes, **caractérisé en ce que** la clé de déchiffrement est fonction d'une information caractéristique du terminal, comme le numéro d'un composant matériel stocké dans la mémoire OTP dudit composant.

5. Procédé de protection d'un terminal mobile selon l'une quelconque des revendications précédentes, **caractérisé en ce que** la clé de déchiffrement est notamment fonction d'une information caractéristique de la carte à puce, cette information étant enregistrée dans une mémoire de la carte à puce de manière non modifiable.

6. Terminal de télécommunication comprenant un composant personnel nécessaire à l'accès réseau de télécommunication de type carte à puce; première unité de traitement, une mémoire de fonctionnement contenant les informations nécessaires au fonctionnement du terminal à savoir un programme de fonctionnement du terminal et des données nécessaires à ce programme, **caractérisé en ce que** le contenu de la mémoire de fonctionnement (23) est chiffré, **en ce que** le terminal comprend en outre une mémoire de programme (21) contenant un programme de démarrage permettant de lancer le calcul de la clé K nécessaire au déchiffrement.

7. Terminal de télécommunication, selon la revendication 6 **caractérisé en ce qu'**il comprend une deuxième unité de traitement (30) dédiée au déchiffrement à la volée de la mémoire de fonctionnement, et un registre (24) pour stocker par blocs les informations déchiffrées à la volée, l'unité de traitement utilisant ces blocs déchiffrés pour travailler.

8. Terminal de télécommunication selon la revendication 6 ou 7, **caractérisé en ce qu'**il comprend un composant (22) matériel non modifiable contenant une donnée caractéristique du terminal, cette donnée étant utilisée dans le calcul de la clé K.

## Claims

1. Method of protecting a telecommunications terminal comprising a personal component required for accessing the telecommunications network, such as a chip card, the terminal comprising a processing unit, at least one operating memory containing the information required for the operation of the terminal, namely a terminal operating system, and the data required for this program, **characterised in that** it consists of the following:
a) encoding the contents of the operating memory of the telecommunications terminal, based on a predetermined key K required for decoding,
b) allowing decoding by the terminal after:
- booting the latter using a boot program stored in a secure memory (21) and,
- the latter calculating the key used for decoding.

2. Method of protecting a mobile terminal according to claim 1, **characterised in that** the decoding is carried out on the fly by a calculation unit (30), which decodes the information in the operating memory by blocks and stores the decoded blocks in a register, the processing unit using these decoded blocks to work.

3. Method of protecting a mobile terminal according to one of the preceding claims, **characterised in that** the use of the terminal can be locked by means of a lock stored in the operating memory.

4. Method of protecting a mobile terminal according to any one of the preceding claims, **characterised in that** the decoding key depends on information that characterises the terminal, such as the number of a hardware component stored in the OTP memory of said component.

5. Method of protecting a mobile terminal according to any one of the preceding claims, **characterised in that** the decoding key depends mainly on information that characterises the chip card, this information being stored in the memory of the chip card in a non-modifiable manner.

6. Telecommunications terminal comprising a personal component required for accessing the telecommunications network such as a chip card; first processing unit, an operating memory containing the information required for the operations of the terminal, such as an operating system of the terminal and the data necessary for this program, **characterised in that** the contents of the operating memory (23) are encoded, **in that** the terminal also comprises a program memory (21) containing a boot program that allows the calculation of the key K required for decoding to be launched.

7. Telecommunications terminal according to claim 6, **characterised in that** it comprises a second processing unit (30) dedicated to on-the-fly decoding of the operating memory, and a register (24) for storing, by blocks, the information decoded on the fly, the processing unit using these decoded blocks to operate.

8. Telecommunications terminal according to claim 6 or 7, **characterised in that** it comprises a non-modifiable hardware component containing a piece of data that characterises the terminal, this data being used for calculating the key K.

## Patentansprüche

1. Verfahren zum Schutz eines Fernsprechendgeräts, das ein persönliches, zum Zugreifen auf ein Fernsprechnetz erforderliches Element vom Typ Chipkarte umfasst, wobei das Endgerät eine Datenverarbeitungseinheit, mindestens einen Betriebsspeicher mit den zum Betrieb des Endgeräts erforderlichen Daten, d.h. ein Betriebsprogramm des Endgeräts, und die für dieses Programm erforderlichen Daten umfasst, **dadurch gekennzeichnet, dass** es:
a) den Inhalt des Betriebsspeichers des Fernsprechendgeräts ausgehend von einem bestimmten, zur Entschlüsselung erforderlichen Schlüssel K, verschlüsselt
b) es die Entschlüsselung durch das Endgerät ermöglicht nach:
- dem Starten des letzteren mittels eines Startprogramms, das in einem gesicherten Speicher (21) gespeichert ist,
- der Berechnung des für die Entschlüsselung notwendigen Schlüssels.

2. Verfahren zum Schutz eines mobilen Endgeräts gemäß Patentanspruch 1, **dadurch gekennzeichnet, dass** die Entschlüsselung "on-the-fly" über eine Rechnereinheit (30) erfolgt, die die Daten des Betriebsspeichers in Datenblöcken entschlüsselt, die entschlüsselten Datenblöcke in einem Verzeichnis ablegt, wobei die Datenverarbeitungseinheit diese entschlüsselten Datenblöcke zum Arbeiten benutzt.

3. Verfahren zum Schutz eines mobilen Endgeräts nach einem der vorhergehenden Ansprüche, **dadurch gekennzeichnet, dass** die Benutzung des Endgeräts mit Hilfe einer im Betriebsspeicher gespeicherten Sperre gesperrt werden kann.

4. Verfahren zum Schutz eines mobilen Endgeräts nach einem der vorhergehenden Ansprüche, **dadurch gekennzeichnet, dass** der Entschlüsselungsschlüssel mit einer charakteristischen Information des Endgeräts verknüpft ist, wie z.B. der Nummer eines Hardwareelements, die im OTP-Speicher besagten Elements gespeichert ist.

5. Verfahren zum Schutz eines mobilen Endgeräts nach einem der vorhergehenden Ansprüche, **dadurch gekennzeichnet, dass** der Entschlüsselungsschlüssel insbesondere mit einer charakteristischen Information der Chipkarte verknüpft ist, wobei diese Information in einem Speicher der Chipkarte unveränderlich gespeichert wird.

6. Fernsprechendgerät, das ein persönliches, zum Zugriff auf das Fernsprechnetz erforderliches Element vom Typ Chipkarte umfasst, eine erste Datenverarbeitungseinheit, ein Betriebsspeicher, der die Informationen enthält, die zum Betrieb des Endgeräts erforderlich sind, nämlich ein Betriebsprogramm des Endgeräts und die für dieses Programm erforderlichen Daten, **dadurch gekennzeichnet, dass** der Inhalt des Betriebsspeichers (23) verschlüsselt ist, und **dadurch gekennzeichnet, dass** das Terminal ferner einen Programmspeicher (21) mit einem Startprogramm umfasst, welches das Starten der Berechnung des zur Entschlüsselung erforderlichen Schlüssels ermöglicht.

7. Fernsprechendgerät nach Patentanspruch 6, der eine zweite Datenverarbeitungseinheit (30) zur "On-the-fly."-Entschlüsselung des Betriebsspeichers umfasst, und ein Register (24) zur Speicherung der "on-the-fly" entschlüsselten Informationen in Form von Datenblöcken, wobei die Datenverarbeitungseinheit diese entschlüsselten Datenblöcke zum Arbeiten verwendet.

8. Fernsprechendgerät nach Patentanspruch 6 oder 7, **dadurch gekennzeichnet, dass** es ein unveränderliches Hardwareelement (22) umfasst, das eine charakteristische Information des Endgeräts enthält, wobei diese Information bei der Berechnung von Schlüssel K benutzt wird.
